## Europäisches Patentamt

## European Patent Office

## Office européen des brevets

(19)

(11) Veröffentlichungsnummer: **0 021 180**
**B1**

(12) **EUROPÄISCHE PATENTSCHRIFT**

(45) Veröffentlichungstag der Patentschrift:
**08.06.83**

(21) Anmeldenummer: **80103141.0**

(22) Anmeldetag: **06.06.80**

(51) Int. Cl.³: **C 04 B  13/14,** C 04 B  11/10,
E 21 F  15/00, E 21 D  11/04

(54) **Verfahren zur Beseitigung und wirtschaftlichen Verwertung des Rückstandes aus der Abgaswäsche von Feuerungen in Verbindung mit Abfallprodukten.**

(30) Priorität: **09.06.79  DE 2923545**

(43) Veröffentlichungstag der Anmeldung:
**07.01.81 Patentblatt 81/1**

(45) Bekanntmachung des Hinweises auf die Patenterteilung:
**08.06.83 Patentblatt 83/23**

(84) Benannte Vertragsstaaten:
**BE DE FR GB NL**

(56) Entgegenhaltungen:

EP-A-0 007 610
DE-A-1 957 263
DE-A-2 002 570
DE-A-2 049 028
DE-A-2 400 350
DE-A-2 803 764
DE-C-2 603 699
US-A-4 108 677

(73) Patentinhaber: **Ruhrkohle Aktiengesellschaft,
Rellinghauser Strasse 1, D-4300 Essen 1 (DE)**
Patentinhaber: **STEAG AG, Bismarckstrasse 54,
D-4300 Essen (DE)**

(72) Erfinder: **Bassier, Friedrich, Dr.-Ing.,
Dr.Wilhelm-Rodenstrasse 129, D-4100 Duisburg (DE)**
Erfinder: **Goldschmidt, Klaus, Dr.-Ing., Ruhrallee 140,
D-4300 Essen (DE)**

## Verfahren zur Beseitigung und wirtschaftlichen Verwertung des Rückstandes aus der Abgaswäsche von Feuerungen in Verbindung mit Abfallprodukten

Die Erfindung betrifft ein Verfahren zur Beseitigung des Rückstandes der Abgaswäsche von Feuerungen von Steinkohlenkraftwerken, bei dem der aus einer Kalkstein- oder Kalkwäsche stammende Rückstand zu Gips aufgearbeitet wird, das aufgearbeitete Substrat zu Alpha-Sulfathalbhydrat umkristallisiert und unter Tage zur Streckensicherung eingebracht wird, wobei das Alpha-Sulfathalbhydrat trocken gefördert und unter Zugabe von Wasser versetzt wird (DE-C-2 603 699).

Die Nasswäsche von Abgasen, insbesondere der von Kraftwerken dient zur Entschwefelung durch Absorption mit Kalkstein ($CaCO_3$) oder Kalk in Form von Oxyd (CaO) oder Hydroxyd [$Ca(OH)_2$]. Die entstehenden Rückstände enthalten das abgeschiedene $SO_2$ hauptsächlich in Form von Calciumsulfit ($CaSO_3.XH_2O$). Das Sulfit fällt in Suspension an und enthält ggf. auch Staub, wenn der Kalk bzw. Kalkstein in Nassschneidern eingesetzt wird, die gleichzeitig zur Staub- und $SO_2$-Abscheidung dienen. Das Calciumsulfit kann aber auch relativ staubfrei anfallen, wenn vor der Nasswäsche Elektrofilter eingesetzt sind.

Die beschriebenen Rückstände fallen in verhältnismässig grosser Menge an. Die Rückstände sind jedoch wegen ihrer Konsistenz und wegen ihrer chemischen Eigenschaft schwer zu handhaben, insbesondere ist eine Deponie mit erheblichen Schwierigkeiten verbunden. Bisher ist die Deponie solcher Rückstände deshalb von den Aufsichtsbehörden noch nicht genehmigt worden.

Nach DE-C-2 603 699 wird dem dadurch abgeholfen, dass das aus Rückständen der Abgaswäsche aufgearbeitete Substrat zu Alpha-Sulfathalbhydrat umkristallisiert und unter Tage zur Streckensicherung eingebracht wird, wobei das Alpha-Sulfathalbhydrat trocken gefördert und unter Zugabe von Wasser versetzt wird.

Das Alpha-Sulfathalbhydrat ersetzt unter Tage die herkömmliche Streckensicherung durch Gruben- bzw. Bauhölzer (Pfeilerholz). Diese Hölzer werden üblicherweise am Streckensaum nach Hereingewinnung der Kohle aufeinandergeschichtet. Mit dieser Aufschichtung zu einem Holzpfeiler wird eine Verbindung zwischen dem Hangenden und Liegenden des Flözes hergestellt, mit dem Ziel, das Hangende im Streckenrandbereich zu unterstützen und damit die Druckauswirkungen auf den Streckenausbau zu mindern und das Streckenprofil nach Form und Querschnitt weitgehend aufrechtzuerhalten. Eine wetterdichte Abkleidung der Strecken entsteht dabei nicht, so dass bei Verwendung von Holzpfeilern zur Streckensaumsicherung ein Wetterkurzschluss zwischen den beiden Abbaustrecken nicht verhindert werden und damit ggf. im «Alten Mann» ein Schwelbrand entstehen kann.

Die Holzschichtung ist ausgesprochen arbeitsintensiv, der Materialaufwand ist hoch, Brandgefahr ist nicht auszuschliessen.

Demgegenüber lässt sich das Alpha-Sulfathalbhydrat pneumatisch an den Einsatzort fördern mit minimalem Arbeitsaufwand und in jeder gewünschten Form einbringen. Der Streckenbegleitdamm dieser Art bringt einen vollen Abschluss gegen Wetterkurzschluss, verhindert dadurch Schwelbrände im «Alten Mann» und ist selbst unbrennbar.

Aus der DE-A-1 957 263 ist ein Verfahren zum Errichten von Mauern im Untertagebetrieb bekannt, bei dem eine Beta-Gips haltige Wasser-Gips-Paste zum Versatzort gefördert wird. Die Paste enthält neben einem äusserst fein gemahlenen latenthydraulischen Material noch einen die Gleitfähigkeit verbessernden und/oder einen verflüssigenden Stoff, einen hydrophobierenden Zusatz sowie ein nicht oder höchstens schwach ionogenes Kolloid. Dabei dient das latenthydraulische Material in seiner äusserst feinen Vermahlung der Verbesserung des Abbindeverhaltens.

In der Praxis haben sich Schwierigkeiten bei den Streckenbegleitdämmen aus reinem Alpha-Halbhydrat eingestellt. Bei Verwendung solcher Streckenbegleitdämme ist es zu Verformungen des Streckenbogens und Aufquellen des Liegenden gekommen.

Der Erfindung liegt die Aufgabe zugrunde, dieses zu verhindern.

Diese Aufgabe wird dadurch gelöst, dass das Alpha-Sulfathalbhydrat mit Flugasche aus Kohleverbrennungsanlagen und/oder mit Wasch- oder Ortsbergen aus der Kohlegewinnung und/oder Aschegranulat und/oder Schlacken aus der Kohleverbrennung und/oder Schlacken aus der Hüttenindustrie und/oder mit dem aus der Abgaswäsche auf Kalkbasis stammenden Calciumsulfit und/oder den daraus aufgearbeiteten Calciumsulfat-Dihydrat derart trocken vermischt wird, dass das Mischungsverhältnis entsprechend der erforderlichen Nachgiebigkeit des erstarrten Werkstoffs gegenüber dem Gebirge in dem Gebirgsdruck eingestellt wird.

Dabei geht die Erfindung von der Erkenntnis aus, dass die Ausbauverformungen und das Quellen des Liegenden aus der Weiterleitung des Gebirgsdruckes vom Hangenden über den sehr tragfesten Streckenbegleitdamm aus Alpha-Sulfathalbhydrat auf das Liegende resultiert. Zwar leiten auch die Holzpfeiler den Gebirgsdruck weiter, sie sind jedoch im Unterschied zu Streckenbegleitdämmen aus Alpha-Sulfathalbhydrat sehr nachgiebig.

In dem aus Alpha-Sulfathalbhydrat und verschiedenen mineralischen Abfallprodukten hergestellten Baustoffen für Streckenbegleitdämme übernimmt das Alpha-Sulfathalbhydrat die Funktion eines hydraulischen Bindemittels. Flugasche, z.B. aus Elektrofiltern von Kraftwerken, kann als Zuschlagstoff unter Ausnutzung ihrer puzzolanischen bzw. latenthydraulischen Eigenschaften auf die Festigkeitsentwicklung und die Kornform mit positivem Einfluss auf die Verarbeitbarkeit eingesetzt werden. Ausserdem bewirkt die Flugasche eine Reduzierung des für den Abbindevorgang benötigten Wassers. Die nach der Erfindung vorgesehene Verwendung von Flugasche beseitigt ein gravierendes Deponieproblem.

Mit der Zugabe von Aschegranulat und ggf. auch grobkörnigen Zuschlagstoffen wie z.B. Hüttenschlacke entsteht ein sogenanntes Fegekorn im staubförmigen Mischgut. Das verhindert Material-ablagerungen des staubförmigen Alpha-Sulfathalb-hydrats und der Flugasche in kritischen Bereichen der pneumatischen Förderwege. Ausserdem verleiht das Fegekorn dem Versatz ein stabileres Gefüge.

Das aus der Aufbereitung von Rückständen der Abgaswäsche von Steinkohlenkraftwerken stammende Calciumsulfit und/oder das daraus aufgearbeitete Calciumsulfat-Dihydrat wäre alleine für die Verwendung in Streckenbegleitdämmen ungeeignet. Es besitzt zu geringe Endfestigkeit. In Vermischung mit dem Alpha-Sulfathalbhydrat verringert es dessen hohe Festigkeit und verleiht ihm als Zuschlagstoff die gewünschte Nachgiebigkeit.

Die erfindungsgemässe unterschiedliche Beimengung von Zuschlagstoffen kann nach Beurteilung des Ortes ohne Schätzung und ohne Erfahrung anhand von vorgegebenen Mengenverhältnissen durchgeführt werden.

Die Aufarbeitung der aus der Abgaswäsche stammenden Rückstände zu Gips und die Umkristallisation werden teilweise vor dem Transport des Alpha-Sulfathalbhydrates und der jeweiligen Zuschlagstoffe vorgenommen. Andererseits lässt sich der aus der Aufbereitung stammende Gips auch vom Steinkohlenkraftwerk bzw. von der Aufbereitungsanlage zu einer Verteilerstation transportieren, hier zu Alpha-Sulfathalbhydrat umkristallisieren, mit Zuschlagstoff (Flugasche usw.) vermischen bzw. homogenisieren und als Gemisch nach Untertage befördern. Die Herstellung des Gemisches kann aber auch unter Tage erfolgen.

Das Gemisch wird pneumatisch gefördert und das Wasser am Ende der Förderung vor dem Versetzen zugegeben.

Alle Gemische aus Bindemitteln «Alpha-Sulfathalbhydrat» und Zuschlagstoff sind ohne Zusatz von Anregern anwendbar, gegen Luftfeuchtigkeit unempfindlich, weisen eine gute Handhabbarkeit auf und binden erst bei Wasserzugabe ab. Sie lassen sich daher leicht transportieren und auf die Böschung des voraufgegangenen Abschnitts, d.h. ohne Trennfuge blasen und damit ohne Übergang einbringen. Dazu sind die üblicherweise unter Tage vorhandenen Förder- und Blaseinrichtungen geeignet. Ein weiterer Vorteil ergibt sich daraus, dass die Staubentwicklung während des Einbringens aufgrund der guten Benetzbarkeit und Wasserannahme des Alpha-Sulfathalbhydrates und der Flugasche sehr gering ist.

In der Zeichnung sind verschiedene bekannte Streckenbegleitdämme und ein Fliessschema der er-findungsgemässen Herstellung von Alpha-Halb-hydrat und dessen Verwendung dargestellt. Es zeigen:

Figur 1 a und 1 b - die Streckenbegleitdämme
Figur 2 - das Fliessschema.

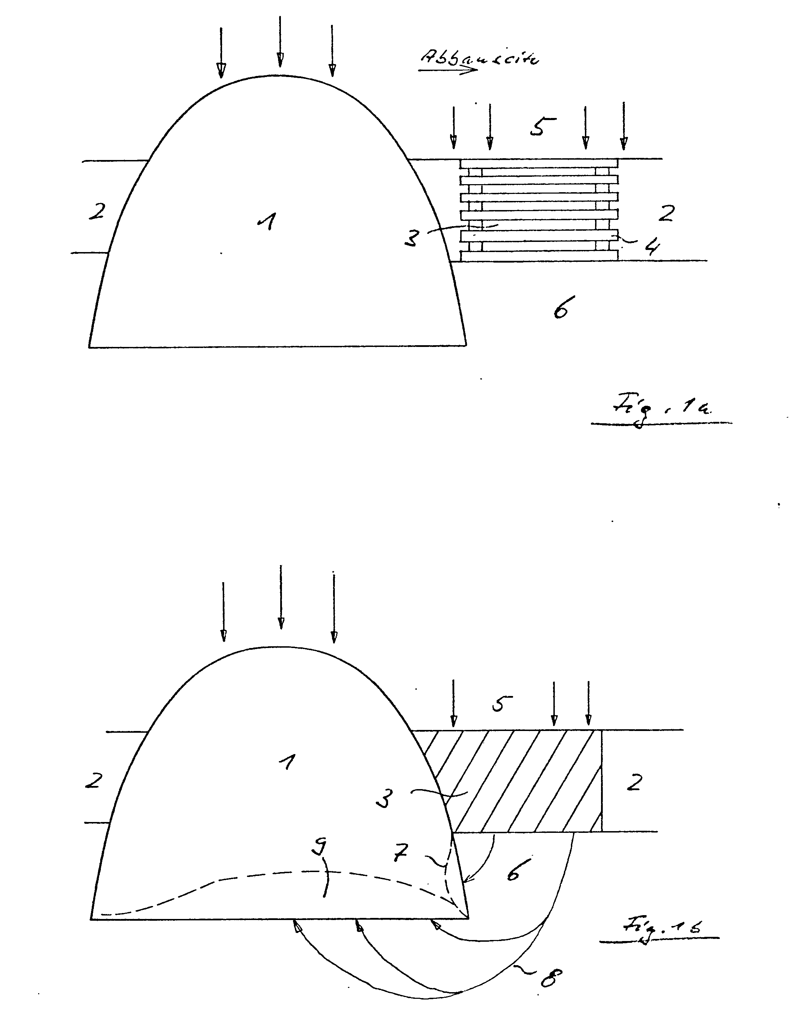

Nach Figur 1 ist mit 1 eine Strecke bezeichnet, die in einem Flöz 2 aufgefahren worden ist. Nach Hereingewinnung des Flözes 2 wird entlang der Strecke 1 in dem entstandenen Hohlraum eine Streckensicherung 3 errichtet. Diese Sicherung besteht nach Figur 1 a in herkömmlicher Herstellung aus aufeinanderge-schichteten Grubenstempeln, Pfeilerholz oder ande-rem Bauholz 4. Die Streckensicherung 3 bildet eine das Hangende 5 über dem Flöz 2 mit dem Liegenden 6 unter dem Flöz 2 verbindende Stütze. Diese Art der Streckensicherung nimmt nachgebendes Gebirge federnd auf. Bei einer Streckensicherung in Form eines Streckenbegleitdammes aus reinem Alpha-Sulfathalbhydrat nach Figur 1 b bewirkt ein hoher Gebirgsdruck eine Verformung 7 des Streckenausbaus und/oder ein mit Pfeilen 8 schematisch dargestelltes Aufbrechen des Streckenliegenden und Hineinwan-dern 9 in den freien Streckenquerschnitt.

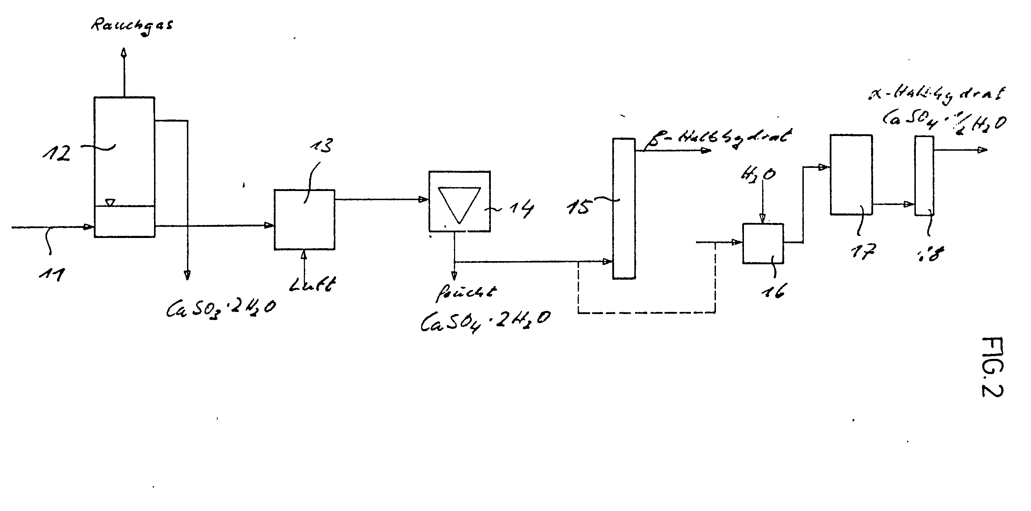

Nach der Erfindung wird deshalb statt des Einsatzes von 100% Alpha-Halbhydrat ein Gemisch aus Alpha-Sulfathalbhydrat und Zuschlagstoffen zur Herstellung eines nachgiebigen Streckenbegleitdammes verwendet. Das Alpha-Sulfathalbhydrat entsteht nach Figur 2 aus Rauchgas, das von einer nicht dargestellten Kesselfeuerung durch eine Ab-gasleitung 11 über eine zwischengeschaltete Abgas-wäsche 12 einem Kamin zugeführt wird und von dort ins Freie tritt.

Das den Rauchgasen enthaltene Schwefeldioxyd wird in wässriger Lösung absorbiert.

Durch Verwendung von Kalk entsteht $CaSO_3 \cdot 2H_2O$ (Sulfit-Dihydrat). Die aus der Kalkwäsche anfallenden Rückstände werden in einem Behälter 13 mit Luft oxidiert. Die behandelten Rückstände der Kalkwäsche gelangen in einen Eindicker 14. Aus dem Eindicker 14 fällt Gipsschlamm $CaSO_4 \cdot 2H_2O$ (Sulfat-Dihydrat) an. Wird der so entstandene Gipsschlamm einem Trockner 15 zugeführt, so entsteht aufgrund besonderer Kristallisierung sogenannter Beta-Sulfathalbhydratgips.

Zur Erzeugung von Alpha-Sulfathalbhydrat wird der Gipsschlamm in einem Mischer 16 mit Wasser versetzt. Der entstandene Gips-Wasserschlamm wird kontinuierlich in einen Autoklaven 17 gepumpt und unter definierten Bedingungen (Temperatur kleiner 150°C) in Alpha-Gips umkristallisiert. Zusätze zur Steuerung des pH-Wertes und zur Veränderung der Kristalltracht des Alpha-Gipses können in den Autoklaven 17 einsortiert werden und ermöglichen die Erzeugung von Alpha-Gipsen mit unterschiedlichen Eigenschaften. Dieser Alpha-Gips wird in wässriger Suspension kontinuierlich aus dem Autoklaven abgezogen und in einer nicht dargestellten Zentrifuge von der wässrigen Phase getrennt. Durch Trocknen z.B. in einem Stromtrockner 18, entsteht pulverförmiger Alpha-Gips ($CaSO_4 \cdot 1/2 H_2O$/Alpha-Halbhydrat).

Nachfolgend sind einige Beispiele für die erfin-dungsgemässe Handhabung des Alpha-Sulfathalb-hydrats gegeben.

*Beispiel 1*

Alpha-Halbhydrat gemischt mit Flugasche im Verhältnis 60 : 40%.

Gute Fliesseigenschaften und Benetzungseigenschaften des Materials.

Mittlere Druckfestigkeit nach 5 Stunden 122 kp/cm²; nach 24 Stunden 150 kp/cm².

Materialbedarf 1,42 t/m³.

Wasser-Feststoffverhältnis bei der Anmischung (WF-Wert) 0,38.

*Beispiel 2*

a) Aus Mischungen von 50% Alpha-Halbhydrat und 50% Flugasche.

b) Aus Mischungen von 40% Alpha-Halbhydrat und 60% Flugasche.

Bei WF-Werten von 0,20 bis 0,30 wurden folgende Festigkeiten ermittelt.

| Abbinde-dauer | 50% Alpha-Halbhydrat 50% Flugasche N/mm$^2$ | 40% Alpha-Halbhydrat 60% Flugasche N/mm$^2$ |
|---|---|---|
| 0,5 h | 6,0 | 3,0 |
| 1 h | 8,0 | 3,5 |
| 5 h | 8,7 - 11,5 | 4,1 - 5,5 |
| 24 h | 9,9 - 13,9 | 5,1 - 8,5 |
| 7 d | 21,7 - 26,4 | 5,9 - 6,6 |

## Patentansprüche

1. Verfahren zur Beseitigung des Rückstandes der Abgaswäsche von Feuerungen von Steinkohlenkraftwerken, bei dem der aus der Kalkstein- oder Kalkwäsche stammende Rückstand zu Gips aufgearbeitet wird, das aufgearbeitete Substrat zu Alpha-Sulfathalbhydrat umkristallisiert und unter Tage zur Streckensicherung eingebracht wird, wobei das Alpha-Sulfathalbhydrat trocken gefördert und unter Zugabe von Wasser versetzt wird, dadurch gekennzeichnet, dass das Alpha-Sulfathalbhydrat mit Flugasche aus Kohleverbrennungsanlagen und/oder mit Wasch- oder Ortsbergen aus der Kohlegewinnung und/oder Aschegranulat und/oder Schlacken aus der Kohleverbrennung und/oder Schlacken aus der Hüttenindustrie und/oder mit dem aus der Abgaswäsche auf Kalkbasis stammenden Calciumsulfit und/oder den daraus aufgearbeiteten Calciumsulfat-Dihydrat derart trocken vermischt wird, dass das Mischungsverhältnis entsprechend der erforderlichen Nachgiebigkeit des erstarrten Werkstoffs gegenüber dem Gebirge und dem Gebirgsdruck eingestellt wird.

2. Verfahren nach Anspruch 1, dadurch gekennzeichnet, dass der Anteil von Flugasche als Zuschlagstoff bis zu 50% beträgt.

3. Verfahren nach Anspruch 2, dadurch gekennzeichnet, dass 20% bis 60% Wasser zugegeben wird.

## Claims

1. Process for the removal of the residue produced by washing furnace exhaust gas, in particular from coalfired power stations, in which the residue derived from the limestone or lime wash is worked up to calcium sulfate, the worked-up substrate is recrystallised to alpha-sulphate hemihydrate and introduced underground as tunnel reinforcement, in which the alpha-sulphate hemihydrate is transported by and handled with the addition of water, characterised in that the alpha-sulphate hemihydrate is dry-mixed with flue dust from coal burning plants and/or with waste washings or roadhead dirt from coal mining and/or ash granulate and/or clinker from coal burning and/or clinker from the smelting industry and/or with the calcium sulfite derived from a lime-based waste gas wash and/or the calcium sulphate dihydrate worked up therefrom, that the mixing ratio is determined according to the desired flexibility of the solidified material with respect to the rock and to the rock pressure.

2. Process according to claim 1, characterised in that the proportion of the flue dust additive is up to 50%.

3. Process according to claim 2, characterised in that 20% to 60% water is added.

## Revendications

1. Procédé d'élimination du résidu du lavage des gaz d'échappement de chauffages de centrales thermiques à houille, dans lequel le résidu provenant du lavage au calcaire ou à la chaux est traité en gypse, le substrat traité étant recristallisé en semi-hydrate de sulfate de calcium alpha et introduit sous terre pour la consolidation de galeries, le semi-hydrate de sulfate de calcium alpha étant transporté à sec et remblayé, avec addition d'eau, caractérisé en ce qu'on mélange à sec au semi-hydrate de sulfate de calcium alpha de la cendre volante provenant d'installations de combustion de charbon et/ou des stériles de lavage ou du front provenant de l'exploitation du charbon et/ou un produit de granulation de cendres et/ou des scories provenant de la combustion du charbon et/ou des scories provenant de l'industrie métallurgique et/ou du sulfite de calcium provenant du lavage des gaz d'échappement à base de chaux et/ou du dihydrate de sulfate de calcium préparé à partir de ce sulfite, ce mélange étant effectué de façon que les proportions du mélange soient ajustées d'une manière correspondant à la flexibilité requise du matériau solidifié par rapport à la roche et à la pression de la roche.

2. Procédé suivant la revendication 1, caractérisé en ce que la fraction de cendre volante à titre d'agrégat peut atteindre jusqu'à 50%.

3. Procédé suivant la revendication 2, caractérisé en ce qu'on ajoute 20% à 60% d'eau.

Abbauseite

Fig. 1a

Fig. 1b

0 021 180

Rauchgas

12

11

CaSO₃·2H₂O

13

Luft

14

feucht
CaSO₄·2H₂O

15

β-Halbhydrat

16

H₂O

17

18

α-Halbhydrat
CaSO₄·½H₂O

FIG.2